# EUROPÄISCHE PATENTSCHRIFT

(11) **EP 1 325 233 B1**
(45) Veröffentlichungstag und Bekanntmachung des Hinweises auf die Patenterteilung: **11.04.2007**
(21) Anmeldenummer: 01972071.3
(22) Anmeldetag: 19.09.2001
(51) Int. Cl.: F15B 1/26

(54) **HYDRAULIKAGGREGAT FÜR DEN LECKAGEHOHLRAUM EINER PUMPE**
HYDRAULIC AGGREGATE FOR THE LEAKAGE CAVITY OF A PUMP
UNITE HYDRAULIQUE POUR LA CAVITE DE FUITE D'UNE POMPE

(30) Priorität: 27.09.2000 DE 10047765; 02.03.2001 DE 10110072
(43) Veröffentlichungstag der Anmeldung: 09.07.2003
(73) Patentinhaber: Continental Teves AG & Co. oHG, 60488 Frankfurt (DE)
(72) Erfinder: HOTZEL, Joachim, 60437 Frankfurt (DE); SCHMITT, Stefan A., 63867 Johannesberg (DE)
(86) Internationale Anmeldenummer: PCT/EP2001/010810
(87) Internationale Veröffentlichungsnummer: WO 2002/027193

(56) Entgegenhaltungen:
- DE-A- 19 851 762
- GB-A- 620 051
- US-A- 3 727 629
- US-A- 3 918 851
- US-A- 4 013 053

## Beschreibung

Die Erfindung betrifft ein Hydraulikaggregat für eine hydraulische Steuer- und/oder Regelvorrichtung nach dem Oberbegriff des Anspruchs 1.

Aus der DE 198 51 762 A1 ist bereits ein Hydraulikaggregat bekannt geworden. Das Hydraulikaggregat weist eine Pumpe auf, deren Leckageraum über ein Rohr in einer Leckagebohrung permanent mit einem Hohlraum eines Deckels verbunden ist. Hierdurch ist unter ungünstigen Betriebsbedingungen des Hydraulikaggregats nicht immer eine funktionsgerechte Be- und Entlüftung als auch eine funktionsgerechte Leckageabfuhr der Pumpe aus dem Leckageraum in den Hohlraum des Deckels gewährleistet. Überdies unterliegt das Rohr sehr engen Fertigungstoleranzen, insbesondere dann, wenn die Öffnung des Rohrs klein ausgeführt ist, was zu einer Blockierung des Rohrdurchgangs führen kann.

Ferner offenbart JP10159711 (Patent Abstract) eine Pumpe, deren Pumpengehäuse ein Druckregelventil zwischen einem Ansaugkanal und einem Leckageraum aufweist, um den Druck im Ansaugkanal bei Bedarf in den Leckageraum abzulassen, wodurch bei gleichzeitigem Verzicht auf eine externe Leckagebohrung der im Pumpengehäuse sowie auf eine in das Pumpengehäuse eingesetzte elastische Dichtung wirksame Hydraulikdruck auf einem gleich bleibenden niedrigen Niveau gehalten werden kann.

Die US-A- 3 727 629 offenbart ein Schwimmerventil, dessen kegelförmiger Ventilkörper in der offenen Ventilstellung am Boden einer Ventilhülse anliegt, die mit einem Gehäusedeckel eines Gefäßes fest verbunden ist. Unter Wirkung des hydrostatischen Drucks verschließt der Ventilkörper eine am oberen Ende der Ventilhülse angeordnete Saugöffnung, die innerhalb einer Membran angeordnet ist, sodass mit dem Eintauchen des Ventilkörpers in die Saugöffnung der Membran der Ventilkörper die Saugöffnung formschlüssig verschließt und auch nach Unterbrechung der Saugwirkung dauerhaft geschlossen in der Membran verharrt.

Aus US-A-3 918 851 geht bereits ein Hydraulikaggregat der gattungsgemäßen Art hervor, dessen Schwimmerventil in einer entfernt vom Pumpengehäuse angeordneten Schwimmerkammer eingesetzt ist, die über eine Leckageleitung mit einem Leckageraum des Pumpengehäuses verbunden ist. Die Schwimmerkammer weist an ihrem Boden eine Leckagebohrung auf, die vom Schwimmerventil in der Ventilgrundstellung verschlossen und bei entsprechend großer Leckagemenge von der Leckagebohrung abgehoben ist, um die Leckage einem unter Atmosphärendruck stehenden Reservoir zuzuführen.

Daher ist es die Aufgabe der vorliegenden Erfindung, ein Hydraulikaggregat der gattungsbildenden Art derart zu verbessern, dass sich dessen Schwimmerventil durch einen besonders kompakten Aufbau und eine besonders einfache Handhabung und Einstellung auszeichnet.

Diese Aufgabe wird erfindungsgemäß für ein Hydraulikaggregat der eingangs genannten Art mit den kennzeichnenden Merkmalen des Patentanspruchs 1 gelöst.

Weitere Merkmale, Vorteile und Anwendungsmöglichkeiten der Erfindung gehen im folgenden aus der Beschreibung eines Ausführungsbeispieles anhand mehrerer Zeichnungen hervor.

Es zeigen:
- Fig. 1: einen Ausschnitt der relevanten Bauteile für ein Hydraulikaggregat,
- Fig. 2: eine Teilansicht des Hydraulikaggregats nach Fig. 1 in der Schließfunktion des erfindungsgemäßen Schwimmerventils,
- Fig. 3: eine Teilansicht des Hydraulikaggregats nach Fig. 1 in der Teiloffenstellung des Schwimmerventils,
- Fig. 4a: eine vergrößerte, geschnittene Darstellung einer Ventilhülse in einer Seitenansicht,
- Fig. 4b: eine Draufsicht auf die Ventilhülse.

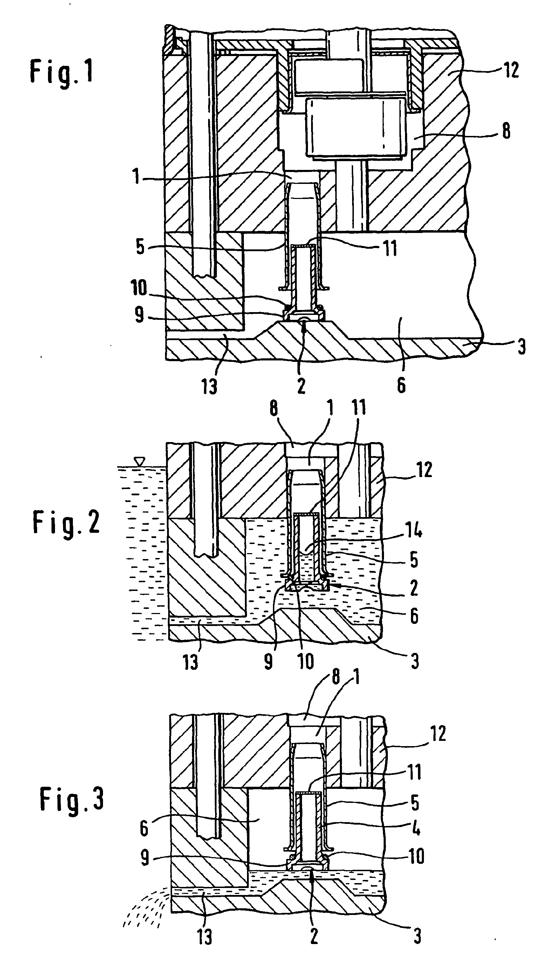

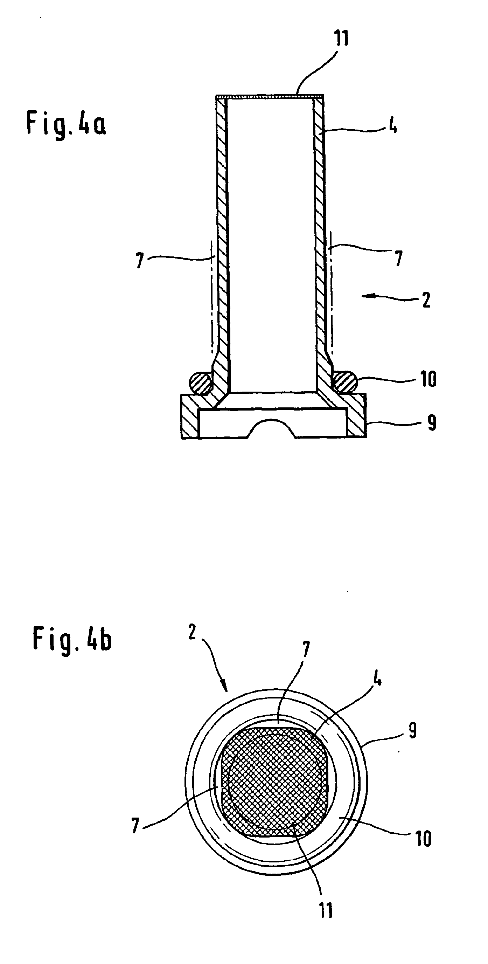

Die Fig. 1 zeigt die prinzipielle Darstellung eines Hydraulikaggregats für eine hydraulische Steuer- und/oder Regelvorrichtung, mit einer Pumpe, deren Pumpengehäuse 12 einen Leckageraum 8 mit einer Leckagebohrung 1 aufweist, die in einen Hohlraum 6 eines am Pumpengehäuse 12 fixierten Deckels 3 einmündet, der eine Druckmittelverbindung 13 zur Atmosphäre aufweist.Die Leckagebohrung 1 ist erfindungsgemäß mit einem Schwimmerventil 2 versehen, das entweder unter Atmosphärendruck im Deckel 3 eine Belüftung oder unter Wirkung eines hydrostatischen Drucks im Deckel 3 einen Verschluss der Leckagebohrung 1 bewirkt. In der abbildungsgemäßen Darstellung befindet sich das Schwimmerventil 2 durch Schwerkraftwirkung in Offenstellung, wozu die abbildungsgemäße Anordnung des Hydraulikaggregats beiträgt. Im Einzelnen weist das Hydraulikaggregat ein blockförmiges Pumpengehäuse 12 auf, in das von oben ein Elektromotor mit einem Exzenter eingefügt ist, der zum Antrieb mehrerer, in der Darstellung nicht gezeigten Pumpenkolben im Pumpengehäuse 12 dient. Somit entspricht der Leckageraum 8 im wesentlichen dem Kurbelraum zur Aufnahme des Pumpenantriebs. Am Boden des Leckageraums 8 schließt sich in Form einer Durchgangsöffnung die Leckagebohrung 1 in Richtung auf den Deckel 3 an. Der Deckel 3 befindet sich folglich unterhalb des blockförmigen Pumpengehäuses 12. Über die an der tiefsten Stelle des Deckels 3 gelegene seitliche Druckmittelverbindung 13 ist eine Be- und Entlüftung des Hohlraums 6 und des Leckageraums 8 sichergestellt, wozu sich das Schwimmerventil 2 in der Offenstellung infolge seiner Gewichtskraft an der erhabenen Innenwandung des Deckels 3 abstützt. Diese abgebildete Stellung des Schwimmerventils 2 erlaubt nicht nur über den großzügig bemessenen Radialabstand zwischen dem Rohrstutzen 5 und der darin beweglichen Ventilhülse 4 des Schwimmerventils 2 eine ungehinderte Be- und Entlüftung der miteinander zu verbindenden Hohlräume (Leckageraum 8, Hohlraum 6), sondern auch gleichzeitig einen ungehinderten Durchgang der aus dem Leckageraum 8 kommenden Pumpenflüssigkeit in den Hohlraum 6 des Deckels 3, so dass die eventuell bestehende Pumpenleckage durch Schwerkraftwirkung entlang der Innenwandung des Deckels 3 zur seitlichen Druckmittelverbindung 13 gelangen kann und von dort auch bei Bedarf aus dem Deckel 3 abgeleitet werden kann. Dadurch ist entlang dem Umfang des Schwimmerventils 2 jederzeit sowohl ein Flüssigkeits- als auch Gasaustausch möglich, solange das Schwimmerventil 2 in der abbildungsgemäßen Offenstellung verharrt. Hingegen beschränkt sich die Funktion der Durchgangsöffnung in der Ventilhülse 4 ausschließlich auf den Gasaustausch zwischen dem Hohlraum 6 und dem Leckageraum 8, da an der Ventilhülse 4 eine flüssigkeitsundurchlässige Membran 11 angebracht ist, worauf in der Beschreibung des Schwimmerventils 2 gemäß den Figuren 4a, 4b eingegangen wird.
Der Deckel 3 ist abbildungsgemäß von unten an der Stirnfläche des Pumpengehäuses 12 angeflanscht. Der Deckel 3 nimmt bei Bedarf elektrische und/oder elektronische Steuer- und Regelelemente zum Betrieb des Elektromotors als auch bei Bedarf zum Betrieb mehrerer im Pumpengehäuse 12 angeordneter Magnetventile auf.

Abweichend von der Offenstellung des Schwimmerventils 2 nach Fig. 1 zeigt die Fig. 2 nunmehr die Schließstellung des Schwimmerventils 2, da sich das Hydraulikaggregat in einer Tauchsituation befindet, in der Wasser über die Druckmittelverbindung 13 in den Hohlraum 6 des Deckels 3 eingedrungen ist. Unter der Wirkung des hydrostatischen Auftriebs am Schwimmerventil2.verschließt die zwischen dem Rohrstutzen 5 und dem Bund 9 am Schwimmerventil 2 angeordnete Ringdichtung 10 den zwischen dem Rohrstutzen 5 und der Ventilhülse 4 gelegene Spalt (Leckagekanal 7 in Fig. 4a, 4b) flüssigkeitsdicht.

Aufgrund der gewählten Ventilkonstruktion verbleibt gleichzeitig innerhalb des Schwimmerventils 2 eine Luftblase 14, die die Schließbewegung des Schwimmerventils 2 begünstigt. Die Luftblase 14 im Schwimmerventil 2 befindet sich zwischen dem Wasserpegel und der stirnseitig am Schwimmerventil 2 angebrachten Membran 11. Bei einer Abkühlung des Hydraulikaggregats erfährt das in dem Leckageraum 8 befindliche Luftvolumen eine Unterdruckwirkung, da ein Druckausgleich durch die mit Wasser benetzte Membran verhindert wird. Das Schwimmerventil 2 verharrt folglich unverändert in der gewünschten Schließstellung bis der Tauchvorgang beendet ist.

Die Fig. 3 zeigt das Schwimmerventil 2 zu Beginn seiner Öffnung, wenn nach Beendigung des Tauchvorgangs das Wasser im Hohlraum 6 über die Druckmittelverbindung 13 wieder zur Atmosphäre austreten kann, wodurch der hydrostatische Auftrieb am Schwimmerventil 2 zusammenbricht. Durch die anschließend dominierende Gewichtskraft des Schwimmerventils 2 ist erneut die Möglichkeit geschaffen, die Pumpenleckage aus dem Leckageraum 8 über den peripheren Leckagekanal 7 in Richtung des Hohlraums 6 abzulassen, während gleichzeitig über die Membran 11 ein Gasaustausch zwischen dem Leckageraum 8 bzw. dem sich daran anschließenden Gehäuse des Elektromotors und der Atmosphäre erfolgen kann. Mit abnehmendem Flüssigkeitsstand im Hohlraum 6 bewegt sich die Ventilhülse 4 infolge der Schwerkraftwirkung und ggf. auch zusätzlich durch Vibrationen des Hydraulikaggregats in die vollständig geöffnete Ventilstellung, die bereits aus der Abbildung nach Fig. 1 hervorgeht.

Die Fig. 4a zeigt basierend auf den vorherigen Erläuterungen eine vergrößerte Seitenansicht der Ventilhülse 4, die vorzugsweise aus einem besonders leichten Material, z.B. aus Polypropylen, besteht, an deren Oberseite eine gasdurchlässige, jedoch den Flüssigkeitsaustausch sperrende, scheibenförmige Membran 11 angeordnet ist, die vorzugsweise auf die Ventilhülse 4 aufgeschweißt ist. Gut zu erkennen sind in dieser Seitenansicht die beiderseits des Ventilhülsenkörpers ähnlich einer Längsnut erstreckenden Leckagekanäle 7, an die sich eine Ringdichtung 10 anschließt, die von einem unterhalb des Rohrabschnitts angeformten Bund 9 nach Art eines Sitzventils getragen wird.

Die Fig. 4b zeigt ausgehend von Figur 4a die Draufsicht auf die Ventilhülse 4, woraus gut erkennbar das Vierkantaußenprofil der Ventilhülse 4 hervorgeht, um einen ungehinderten Gasaustausch und Flüssigkeitsablauf in der geöffneten Stellung des Schwimmerventils 2 zu ermöglichen. Koaxial zum Querschnitt der Ventilhülse 4 ist die als Netz bzw. Maschengeflecht dargestellte Membran 11 zu erkennen (z.B. Goretex-Membran), während am Bund 9 die Ringdichtung 10 gehalten ist.

Die Erfindung beschreibt somit ein selbsttätiges Schwimmerventil 2, welches in der normalerweise geöffneten Stellung die Belüftung des Elektromotors sowie den ungehinderten Leckageabfluss aus dem Leckageraum 8 der Pumpe gewährleistet. Im Fall einer Tauchsituation schließt das Schwimmerventil 2 selbsttätig und verhindert somit das Eindringen von Wasser in den Leckageraum 8 und in den Elektromotor. Bemerkenswert ist die Verwendung der gasdurchlässigen Membran 11, welche nach der Tauchsituation einen Druckausgleich zwischen dem Innenraum des Elektromotors und der Atmosphäre ermöglicht. Der Druckausgleich ist die Voraussetzung für ein selbsttätiges Öffnen des Schwimmerventils 2.

Eine besonders einfache Konstruktion ergibt sich für das Schwimmerventil 2, wenn es als Ventilhülse 4 gestaltet ist, die in einem Rohrstutzen 5 in der Leckagebohrung 1 gleitend angeordnet ist, wobei sich der Rohrstutzen 5 abschnittsweise in den Hohlraum 6 des Deckels 3 erstreckt. Zwischen dem Rohrstutzen 5 und der Ventilhülse 4 ist wenigstens ein Leckagekanal 7 notwendig, der Leckageflüssigkeit aus dem Leckageraum 8 der Pumpe in der Offenstellung des Schwimmerventils 2 in den Hohlraum 6 des Deckels 3 ablässt.

Eine konstruktiv besonders günstige Herstellung mehrerer Leckagekanäle 7 ist bei Ausbildung der Ventilhülse 4 als Vierkantaußenprofil möglich, dessen Endabschnitt in einen Bund 9 übergeht, an dem zur Bildung eines Ventilsitzes die Ringdichtung 10 angeordnet ist. Die Ringdichtung verschließt unter Wirkung der hydrostatischen Auftriebskraft den Rohrstutzen 5 und damit die Leckagekanäle 7.
Wie bereits erwähnt, kommt dem vom Bund 9 entfernt gelegenen Ende der Ventilhülse 4 eine besondere Bedeutung zu, da sie die gasdurchlässige, jedoch flüssigkeitsundurchlässige Membran 11 aufnimmt, die in der Schließstellung des Schwimmerventils 2 den Leckageraum 8 im Pumpengehäuse flüssigkeitsdicht vom Hohlraum 6 und Deckel 3 trennt.

Durch die vorgestellte Konstruktion ist es möglich, dass der Rohrstutzen 5 mit dem Schwimmerventil 2 eine vormontierte und vorjustierte, eigenständig handhabbare Baugruppe bildet, dessen Rohrstutzen 5 zu Einstellzwecken des Schwimmerventils 2 abschnittsweise um ein definiertes Einstellmaß in die Leckagebohrung 1 eingepresst ist.

Konstruktiv ist dafür Sorge zu tragen, dass zwischen dem Rohrstutzen 5 und der Innenwand des Deckels 3 ein Axialabstand vorgesehen ist, der wenigstens so groß ist wie der Arbeitshub des Schwimmerventils 2, wobei das Schwimmerventil 2 in der Offenstellung sich mit seinem Bund 9 an der Innenwand des Deckels 3 abstützt.

### Bezugszeichenliste

- 1: Leckagebohrung
- 2: Pumpengehäuse
- 3: Deckel
- 4: Ventilhülse
- 5: Rohrstutzen
- 6: Hohlraum
- 7: Leckagekanal
- 8: Leckageraum
- 9: Bund
- 10: Ringdichtung
- 11: Membran
- 12: Pumpengehäuse
- 13: Druckmittelverbindung
- 14: Luftblase

## Patentansprüche

1. Hydraulikaggregat für eine hydraulische Steuer- und/oder Regelvorrichtung, mit einer Pumpe, deren Pumpengehäuse (2) einen Leckageraum (8) mit einer Leckagebohrung (1) aufweist, die in einen Hohlraum (6) eines Deckels (3) einmündet, der eine Druckmittelverbindung zur Atmosphäre aufweist, wobei die Leckagebohrung (1) über ein Schwimmerventil (2) mit der Atmosphäre verbunden ist, das unter der Wirkung eines hydrostatischen Drucks im Deckel (3) einen Verschluss der Leckagebohrung (1) bewirkt, **dadurch gekennzeichnet, dass** der Deckel (3) am Pumpengehäuses fixiert ist, und dass das Schwimmerventil (2) aus einer Ventilhülse (4) besteht, die in einem in der Leckagebohrung (1) eingesetzten, sich in den Hohlraum (6) des Deckels (3) erstreckenden Rohrstutzen (5) gleitend angeordnet ist, der mit dem Schwimmerventil (2) eine vormontierte und vorjustierte, eigenständig handhabbare Baugruppe bildet, wobei der Rohrstutzen (5) zu Einstellzwecken des in der Grundstellung geöffneten Schwimmerventils (5) abschnittsweise in die Leckagebohrung (1) eingepresst ist.

2. Hydraulikaggregat nach Anspruch 1, **dadurch gekennzeichnet, dass** zwischen dem Rohrstutzen (5) und der Ventilhülse (4) wenigstens ein Leckagekanal (7) angeordnet ist, der Leckageflüssigkeit aus dem Leckageraum (8) der Pumpe in der Offenstellung des Schwimmerventils (2) in den Hohlraum (6) des Deckels (3) gelangen lässt.

3. Hydraulikaggregat nach Anspruch 1 oder 2, **dadurch gekennzeichnet, dass** die Ventilhülse (4) zur Bildung mehrerer Leckagekanäle (7) mit einem Vierkantaußenprofil versehen ist, dessen Ende einen Bund (9) aufweist, an dem zur Bildung eines Ventilsitzes eine Ringdichtung (10) angeordnet ist, die unter Wirkung eines hydrostatischen Drucks am Rohrstutzen (5) anliegt und den Leckagekanal (7) verschließt.

4. Hydraulikaggregat nach Anspruch 3, **dadurch gekennzeichnet, dass** das vom Bund (9) entfernt gelegene Ende der Ventilhülse (4) mit einer gasdurchlässigen, jedoch flüssigkeitsundurchlässigen Membran (11) versehen ist, die in der Schließstellung des Schwimmerventils den Leckageraum (8) im Pumpengehäuse flüssigkeitsdicht vom Hohlraum (6) im Deckel (3) trennt.

5. Hydraulikaggregat nach einem der vorhergehenden Ansprüche, **dadurch gekennzeichnet, dass** zwischen dem Rohrstutzen (5) und der Innenwand des Deckels (3) ein Axialabstand vorgesehen ist, der wenigstens so groß ist wie der Arbeitshub des Schwimmerventils (2), wobei das Schwimmerventil (2) in der Offenstellung sich mit seinem Bund (9) an der Innenwand des Deckels (3) abstützt.

## Claims

1. Hydraulic aggregate for a hydraulic controlling and/or regulating device, comprising a pump in a pump housing (2) that includes a leakage chamber (8) with a leakage bore (1) opening into a hollow space (6) of a lid (3) fixed to the pump housing, said hollow space having a pressure-fluid connection to the atmosphere, with the leakage bore (1) being connected to the atmosphere by way of a float valve (2), which brings about closure of the leakage bore (1) under the effect of hydrostatic pressure in the lid (3)
**characterized in that** the lid (3) is fixed at the pump housing, and **in that** the float valve (2) comprises a valve sleeve (4) which is slidably arranged in a tubular socket (5) that is inserted into the leakage bore (1) and extends into the hollow space (6) of lid (3), the said tubular socket (5) in conjunction with the float valve (2) forming a pre-assembled and pre-adjusted independently operable assembly, with sections of the tubular socket (5) being pressed into the leakage bore (1) for the purpose of adjusting the float valve (2) that is open in its basic position.

2. Hydraulic aggregate as claimed in claim 1,
**characterized in that** at least one leakage channel (7) is interposed between the tubular socket (5) and the valve sleeve (4), said leakage channel allowing leakage fluid out of the leakage chamber (8) of the pump to propagate into the hollow space (6) of lid (3) when the float valve (2) adopts its open position.

3. Hydraulic aggregate as claimed in claim 1 or 2,
**characterized in that** for forming several leakage channels (7), the valve sleeve (4) has a square outside profile with an end that includes a collar (9) whereat an annular seal (10) is arranged for forming a valve seat, said seal (10) abutting on the tubular socket (5) and closing the leakage channel (7) under the effect of hydrostatic pressure.

4. Hydraulic aggregate as claimed in claim 3,
**characterized in that** the end of the valve sleeve (4) remote from the collar (9) has a gas-permeable, but fluid-impermeable diaphragm (11) that fluid-tightly isolates the leakage chamber (8) in the pump housing from the hollow space (6) in lid (3) when the float valve adopts its closed position.

5. Hydraulic aggregate as claimed in any one of the preceding claims,
**characterized in that** between the tubular socket (5) and the inside wall of the lid (3), there is an axial distance which is at least as large as the working stroke of the float valve (2), the said float valve (2) in its open position being supported with its collar (9) on the inside wall of the lid (3).

## Revendications

1. Groupe hydraulique pour un dispositif hydraulique de commande et/ou de régulation, avec une pompe dont le carter de pompe (2) comporte un volume de fuite (8) avec un trou de fuite (1) qui débouche dans une cavité (6) d'un couvercle (3) lequel comporte une liaison pour fluide sous pression avec l'atmosphère, le trou de fuite (1) étant relié à l'atmosphère par une soupape à flotteur (2) qui, sous l'action d'une pression hydrostatique, provoque dans le couvercle (3) une fermeture du trou de fuite (1), **caractérisé en ce que** le couvercle (3) est fixé au carter de pompe et **en ce que** la soupape à flotteur (2) est constituée d'une douille de soupape (4) qui est disposée à glissement dans une tubulure (5) insérée dans le trou de fuite (1) et s'étendant dans la cavité (6) du couvercle (3), laquelle tubulure forme avec la soupape à flotteur (2) un ensemble prémonté et pré-ajusté, à manipuler de manière indépendante, la tubulure (5) étant pressée par endroits, à des fins de réglage de la soupape à flotteur (5) ouverte en position de base, dans le trou de fuite (1).

2. Groupe hydraulique selon la revendication 1, **caractérisé en ce qu'**entre la tubulure (5) et la douille de soupape (4) est disposé au moins un canal de fuite (7) qui, en position ouverte de la soupape à flotteur (2), laisse parvenir dans la cavité (6) du couvercle (3), le liquide de fuite provenant du volume de fuite (8) de la pompe.

3. Groupe hydraulique selon la revendication 1 ou 2, **caractérisé en ce que** la douille de soupape (4) est pourvue, pour former plusieurs canaux de fuite (7), d'un profilé extérieur carré dont l'extrémité présente un épaulement (9) sur lequel, pour former un siège de soupape, est disposée une garniture d'étanchéité annulaire (10) qui, sous l'action d'une pression hydrostatique, s'applique contre la tubulure (5) et ferme le canal de fuite (7).

4. Groupe hydraulique selon la revendication 3, **caractérisé en ce que** l'extrémité, éloignée de l'épaulement (9), de la douille de soupape (4), est pourvue d'une membrane (11) perméable aux gaz, mais imperméable aux liquides, qui, en position fermée de la soupape à flotteur, sépare le volume de fuite (8) dans le carter de pompe de la cavité (6) du couvercle (3), de manière étanche aux liquides.

5. Groupe hydraulique selon l'une des revendications précédentes, **caractérisé en ce qu'**entre la tubulure (5) et la paroi intérieure du couvercle (3), est prévu un écartement axial qui est au moins aussi grand que la course de travail de la soupape à flotteur (2), la soupape à flotteur (2) en position ouverte prenant appui par son épaulement (9) contre la paroi intérieure du couvercle (3).
